# NEUE EUROPÄISCHE PATENTSCHRIFT

(11) **EP 0 852 980 B2**
(45) Veröffentlichungstag und Bekanntmachung des Hinweises auf die Entscheidung über den Einspruch: **12.01.2005**
(45) Hinweis auf die Patenterteilung: 29.09.1999
(21) Anmeldenummer: 98100201.7
(22) Anmeldetag: 08.01.1998
(51) Int. Cl.: B23D 45/14, B23D 47/04

(54) **Vorrichtung und Verfahren zum Schneiden einer Scheiben-Einspannleiste**
Apparatus and method for glazing strip cutting
Dispositif ainsi que méthode pour la découpe de baguettes d'encadrement

(30) Priorität: 14.01.1997 DE 19700977
(43) Veröffentlichungstag der Anmeldung: 15.07.1998
(73) Patentinhaber: elumatec GmbH & Co. KG, 75417 Mühlacker-Lomersheim (DE)
(72) Erfinder: Bebek, Stephan, 75053 Gondelsheim (DE)
(74) Vertreter: Lindner, Michael, Dipl.-Ing.

(56) Entgegenhaltungen:
- EP-A- 0 685 284
- DE-A- 2 722 335
- DE-A- 4 018 323
- DE-C- 3 409 731
- US-A- 4 208 934
- US-A- 5 158 124

## Beschreibung

Die Erfindung betrifft eine Vorrichtung zum Schneiden einer eine Scheibenanlagefläche aufweisenden Scheiben-Einspannleiste, gemäß des Oberbegriffs des Anspruchs 1. Die Erfindung betrifft trifft des weiteren ein Verfahren zum Schneiden einer eine Scheibenanlagefläche aufweisenden Scheiben-Einspannleiste gemäß Oberbegriffs des Anspruchs 14. Ein Beispiel eine Vorrichtung und eines Verfahrens der vorgenannten Art ist die Glasleistensäge GLX-P der Fa. Rapid Maschinenbau GmbH.

Aus der Druckschrift DE 29509797 U1 ist eine Schneidmaschine zum Schneiden von blättrigem Gut bekannt. Die Schneidmaschine umfaßt einen Auflagetisch für das Gut und eine Spanneinrichtung, die das Gut zum Einspannen gegen den Auflagetisch drückt.

Des weiteren ist eine Vorrichtung zum Schneiden eines länglichen Gutes beispielsweise auch aus der Druckschrift US-A-5,239,905 bekannt. Die Vorrichtung umfaßt eine Auflagefläche zum Auflegen einer zu schneidenden Leiste, die durch eine Spanneinrichtung an eine Anschlagfläche gedrückt und damit lagefixiert wird. Die Anschlagfläche erstreckt sich dabei senkrecht zur Auflagefläche.

Die Druckschrift DE-A1-27 22 335 offenbart eine Gehrungssäge für Glashalteleisten von Fensterund Türrahmen. Die Gehrungssäge weist einen Aufspanntisch mit pneumatischen Spannzylindern auf, wobei diese senkrecht zur Fläche des Aufspanntisches wirken. Zum Ablängen einer Glashalteleiste wird diese auf dem Auflagetisch durch die Spannzylinder festgeklemmt und durch ein auf einem Schlitten angeordnetes Sägeaggregat bearbeitet.

Die Druckschrift DE-C1-34 09 731 offenbart eine Tischkreissäge zum Sägen von Stahlprofilstäben. Sie besitzt ein in einem Sägeschlitz eines Drehtellers arbeitendes Kreissägeblatt und eine an einem Maschinenoberteil angeordnete drehfeste Spannvorrichtung für das zu sägende Werkstück. Die Spannvorrichtung besitzt einen Wegstückanschlag sowie eine Spannzylinderkolbenanordnung mit Spannplatte und unter der Spannplatte angeordnete Spannelemente. Die Spannvorrichtung beaufschlagt das auf dem Drehteller aufliegende Werkstück mit einer Kraft, die senkrecht zum Drehteller gerichtet ist

Die Druckschrift DE-A1-40 18 323 offenbart ein Verfahren und eine Einrichtung zum paarweisen Bearbeiten von Werkstücken aus Holz oder Kunststoff, insbesondere von Rahmenteilen für Fenster, Türen oder dergleichen. Die Vorrichtung weist eine Spannvorrichtung auf, die das Werkstück von oben her festlegt, d.h. das Werkstück mit einer senkrecht zu der Auflagefläche wirkenden Kraft beaufschlagt. Zusätzlich ist eine Andrückvorrichtung vorgesehen, die die Innenlängsseite des Werkstücks mit einer horizontal wirkenden Kraft beaufschlagt, um das Werkstück seitlich gegen einen Werkstückanschlag zu drücken.

Die Druckschrift US 4,208,934 zeigt eine Vorrichtung zum Zuschneiden eines Profils. Das Profil liegt hierfür auf einer Auflagefläche auf und wird gegen eine seitliche Anschlagfläche gedrückt.

Die Druckschrift EP-A1-0 685 284 offenbart eine Vorrichtung zum Sägen eines Werkstücks, das auf einer verstellbaren Auflagefläche aufliegt.

Die Druckschrift US 5,158,124 offenbart eine Vorrichtung zum Abschneiden der Endabschnitte von halbkreisförmigen bzw. halbelliptischen Teilen.

Allgemein sind Vorrichtungen und Verfahren der vorgenannten Art bekannt und dienen dazu, Scheiben-Einspannleisten (im folgenden kurz Einspannleisten genannt) abzulängen. Die Einspannleisten ihrerseits werden dazu verwendet, eine Glas- bzw. Fensterscheibe, beispielsweise in einem Fensterrahmen, einzuspannen. Sie weisen hierfür eine mit einer Dichtung versehene Scheibenanlagefläche auf, die mit der einzuspannenden Scheibe zusammenwirkt, sowie eine an einer benachbarten Fläche der Einspannleiste vorgesehene Klemmeinrichtung, die mit dem Rahmen zusammenwirkt.

Zum Zuschneiden werden diese Einspannleisten mit der die Klemmeinrichtung aufweisenden Seite auf die Auflagefläche aufgelegt, wobei die Klemmeinrichtung einer ersten Fixierung auf der Auflagefläche dient.

Eine weitere Fixierung der Einspannleiste auf der Auflagefläche leistet die Spanneinrichtung, die beispielsweise mittels eines Bolzens die Einspannleiste auf die Auflagefläche drückt.

Ein Nachteil bekannter Vorrichtungen ist darin zu sehen, daß sich insbesondere Gehrungsschnitte nicht exakt ausführen lassen, so daß sich im eingebauten Zustand zwischen benachbarten Einspannleisten aufgrund von Paßungenauigkeiten unerwünschte Spalten bilden. Dies liegt daran, daß die Einspannleisten bedingt durch die Scheibenspannung etwas verkippt werden. Damit verändert sich die Lage der Schnittfläche, so daß eine vollflächige Anlage an der benachbarten Einspannleiste nicht mehr möglich ist. Des weiteren überlappen sich die Dichtungen benachbarter Einspannleisten im eingebauten Zustand, was aus ästhetischen Gründen unerwünscht ist

Die Aufgabe der vorliegenden Erfindung besteht deshalb darin, eine Vorrichtung und ein Verfahren zu schaffen, die ein exaktes Ablängen der Einspannleisten mit vereinfachten Mitteln ermöglicht.

Die der Erfindung zugrundeliegende Aufgabe wird von einer Vorrichtung gemäß Anspruch 1 gelöst.

Dieses Vorrichtung ermöglicht es in vorteilhafter Weise, die Scheiben-Einspannleiste beim Schneiden in eine Position zu bringen, die der Position im eingebauten Zustand entspricht. Das Mittel simuliert somit ein durch die Scheibe verursachtes Kippmoment, das zu dem zuvor erwähnten Kippen der Einspannleiste im eingebauten Zustand führt. Auf diese Weise läßt sich mit einfachen Mitteln erreichen, daß die Schnittflächen benachbarter Einspannleisten im eingebauten Zustand im wesentlichen parallel zueinander liegen. Eine Spaltbildung wird somit verhindert. Des weiteren läßt sich ein Überlappen der Dichtungen benachbarter Einspannleisten vermeiden.

Ein weiterer Vorteil besteht darin, daß die auf die Scheibenanlagefläche wirkende Kraft eine Fixierung der Dichtung erzielt, so daß die Gefahr des Ausreißens der Dichtung aus der Leiste beim Schneiden bzw. Sägen deutlich verringert wird.

In einer vorteilhaften Weiterbildung umfaßt das Mittel eine Platte, die mit der Scheibenanlagefläche der Einspannleiste, vorzugsweise mittels eines pneumatischen Antriebs, in Kontakt bringbar ist.

Dies hat den Vorteil, daß die Simulation der Scheibe verbessert wird, da die mit einer Kraft beaufschlagte Fläche der Scheibenanlagefläche vergrößert wird.

In einer vorteilhaften Weiterbildung der Erfindung ist dem Antrieb ein Anschlagmittel zugeordnet, das die Verlagerung des Mittels in Richtung der Scheibenanlagefläche begrenzt. Vorzugsweise umfaßt das Anschlagmittel eine einstellbare Schraube, die mit einer entsprechenden Anschlagfläche zusammenwirkt.

Dieses Anschlagmittel ermöglicht in einfacher Weise, die auf die Scheiben-Einspannleiste wirkende Kraft einzustellen und somit an unterschiedliche Gegebenheiten, wie unterschiedliche Scheibendicke, anzupassen.

In einer weiteren vorteilhaften Ausführung der Erfindung ist die Auflagefläche als Konterplatte ausgebildet, die eine Nut aufweist, in die ein an der Einspannleiste vorgesehener Vorsprung eingreift.

Dies hat den Vorteil, daß die Simulation weiter verbessert wird, da die Scheiben-Einspannleiste über ihren Vorsprung in der Auflagefläche vorfixiert wird, was im wesentlichen der Vofixierung im Rahmen entspricht

In einer vorteilhaften Weiterbildung der Erfindung ist eine sich parallel zur Auflagefläche erstrekkende Führungsstange vorgesehen, deren eines Ende mit dem Antrieb zusammenwirkt und an der die Platte angebracht ist.

In einer vorteilhaften Weiterbildung ist die Konterplatte so ausgebildet, daß die Einspannleiste so positioniert wird, daß deren Scheibenanlagefläche der Vorschubrichtung eines Sägeblattes abgewandt ist.

Dies hat den Vorteil, daß sich an den sichtbaren Flächen der Einspannleiste auch bei nachlassender Schneidwirkung eines Sägeblattes kein Grat bildet.

In einer vorteilhaften Weiterbildung sind in der Konterplatte im Sägebereich Öffnungen vorgesehen, die als Abfallöffnungen dienen.

Dies hat den Vorteil, daß die insbesondere beim Gehrungssägen anfallenden Abfallstücke einfach nach unten aus der Vorrichtung herausfallen können.

In einer vorteilhaften Weiterbildung umfaßt das Anschlagmittel ein drehbares Trägerelement, an dem mehrere Schrauben angeordnet sind. Vorzugsweise ist das Trägerelement kreisförmig ausgebildet und die Schrauben auf einer gedachten Kreislinie gleichmäßig beabstandet zueinander angeordnet

Die hat den Vorteil, daß sich die auf die Scheiben-Einspannleiste wirkende Kraft und damit der Verbppungswinkel einfach einstellen läßt, in dem das Trägerelement lediglich gedreht werden muß.

Die der Erfindung zugrundeliegende Aufgabe wird von einem Verfahren gemäß Anspruch 14 gelöst.

Wie bereits im Zusammenhang mit der erfindungsgemäßen Vorrichtung erläutert, lassen sich hiermit die im eingebauten Zustand auf die Scheiben-Einspannleiste durch die Glasscheibe hervorgerufenen Kräfte simulieren, so daß eine hohe Paßgenauigkeit möglich wird.

Die parallel zu der Auflagefläche gerichtete Kraft hat den Vorteil daß eine in der Scheiben-Einspannleiste vorgesehene Dichtung zusätzlich fixiert wird, so daß sie beim Schneiden nicht ausreißt.

Die Erfindung wird nun anhand von Ausführungsbeispielen mit Bezug auf die Zeichnungen näher erläutert. Dabei zeigen:
- Figur 1a: eine Seitenansicht der erfindungsgemäßen Vorrichtung,
- Figur 1b: eine schematische Darstellung einer Einspannleiste im Querschnitt,
- Figur 2: die erfindungsgemäße Vorrichtung in Draufsicht,
- Figur 3: die erfindungsgemäße Vorrichtung in einer Vorderansicht, und
- Figur 4: ein zweites Ausführungsbeispiel der erfindungsgemäßen Vorrichtung.

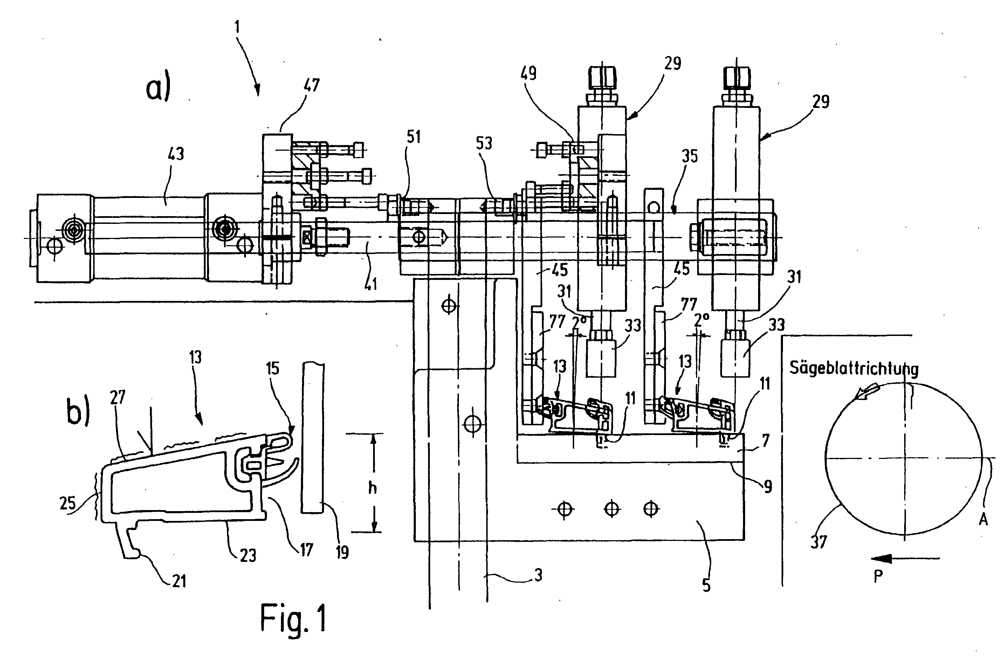

In Figur 1 ist ein Teil einer Schneidvorrichtung 1 dargestellt, die einen an einem Träger 3 angebrachten Auflagetisch 5 umfaßt. Der Träger 3 ist Teil des gesamten Rahmens der Sägevorrichtung, der der Übersichtlichkeit wegen jedoch nicht dargestellt ist. Der sich senkrecht zur Zeichenebene erstrekkende Auflagetisch 5 umfaßt eine Konterplatte 7, die vorzugsweise wieder lösbar auf der in Figur 1 oberen Fläche 9 des Auflagetisches 5 angeordnet ist. In einer der oberen Tischfläche 9 abgewandten Fläche der Konterplatte 7 sind zwei beabstandet zueinander angeordnete sich senkrecht zu der Zeichenebene erstreckende parallele Nuten 11 vorgesehen, die zur Fixierung und Positionierung von Einspannleisten 13 dienen.

In Figur 1b ist in vergrößerter Darstellung eine solche Einspannleiste 13 gezeigt. Obgleich die Form einer solchen Einspannleiste 13 je nach Bedarf variieren kann, weist sie zumindest jeweils eine Dichtungseinheit 15, im folgenden als Dichtung bezeichnet, auf, die an einer im folgenden als Scheibenanlagefläche 17 bezeichneten Seite vorgesehen ist. Diese Anlagefläche 17 mit der Dichtung 15 wird zum Einspannen einer Scheibe 19 in einem aus Profilstücken zusammengesetzten Rahmen gegen den Randbereich der Scheibe 19 gedrückt und mit dem Rahmen verbunden. Zur Verbindung der Einspannleiste 13 mit dem Rahmen ist ein hakenförmiger Vorsprung 21 an einer der Scheibenanlagefläche 17 benachbarten Seite 23 vorgesehen. Dieser Vorsprung 21 wirkt im eingebauten Zustand mit einer entsprechend ausgebildeten Profilierung im Rahmen klemmend zusammen. Im eingebauten Zustand sind somit nur noch die Seitenflächen 25 und 27 der Einspannleiste 13 von außen sichtbar.

Zum Ablängen einer solchen Einspannleiste 13 auf eine dem Rahmen entsprechende Größe wird die Einspannleiste 13 auf die Konterplatte 7 aufgelegt. Zur exakten Lagepositionierung und einer ersten Fixierung auf der Konterplatte 7 greifen die Vorsprünge 21 in die Nuten 11 ein. Im vorliegenden Ausführungsbeispiel liegen auf der Konterplatte 7 zwei Einspannleisten 13 zum Ablängen parallel zueinander auf.

Die zum Sägen notwendige Lagefixierung wird durch Spanneinrichtungen 29 erbracht. Sie umfassen jeweils eine sich senkrecht zur Konterplatte 7 erstrekkende Stange 31, die mittels eines Antriebs, vorzugsweise eines pneumatischen Antriebs in deren Längsrichtung, d.h. senkrecht zur Konterplatte 7 verlagerbar ist. An einem der Konterplatte 7 zugewandten Ende der Stange 31 ist ein Spannelement 33 aus Gummi, angebracht, das mit der Spannleiste 13 zusammenwirkt. Zur Positionierung des Spannelements 33 relativ zu der auf der Konterplatte 7 liegenden Einspannleiste 13 ist das Spannelement auf einer Welle 35 angebracht, die parallel zur Konterplatte 7 und quer zu der Längsrichtung der Scheiben-Einspannleiste 13 verlagerbar ist. Der zur Verlagerung notwendige Antrieb, vorzugsweise ein pneumatischer Antrieb, ist der Übersichtlichkeit wegen in den Figuren nicht dargestellt.

Die Sägevorrichtung 1 weist darüber hinaus zumindest ein Sägeblatt 37 auf, das auf einem Schlitten in Pfeilrichtung P, das heißt senkrecht zur Längsrichtung der auf der Konterplatte 7 aufliegenden Einspannleiste 13 verlagerbar angeordnet ist. Der Einfachheit wegen ist in der Figur lediglich -stellvertretend für die gesamte Einheit- das Sägeblatt 37 dargestellt. Zur Erzielung von Gehrungsschnitten ist das Sägeblatt 37 aus der in Figur 1 gezeigten parallel zur Zeichenebene liegenden Position heraus um eine Achse A kippbar, wobei üblicherweise um einen Winkel von 45° gekippt wird.

Des weiteren weist die Sägevorrichtung 1 eine sich parallel zur Konterplatte 7 erstreckende Welle 41 auf, die mittels eines pneumatischen Antriebs 43 quer zu der Längsrichtung der Einspannleiste 13 verlagerbar ist. An einem der Konterplatte 7 zugewandten Ende der Welle 41 sind in Wellenlängsrichtung beabstandet zueinander angeordnete Arme 45 vorgesehen, die sich senkrecht zur Konterplatte 7 zu dieser hin erstrecken.

Auf der Welle 41 sind zwei Anschlagmittel 47, 49 angebracht, mit deren Hilfe die Verlagerung der Welle 41 in beide Richtungen, das heißt in der Figur 1 nach links und nach rechts, begrenzt wird.

Das Anschlagmittel 47 wirkt zur Begrenzung der Bewegung nach rechts mit einem ortsfesten Anschlag 51 zusammen, während das zweite Anschlagmittel 49 zur Begrenzung nach links mit einem ebenfalls ortsfesten Anschlag 53 zusammenwirkt. Das Anschlagmittel 49 wird so eingestellt, daß die Arme 45 eine Position einnehmen, die ein Einlegen der Einspannleisten 13 ermöglichen. Das Anschlagmittel 47 wird so eingestellt, daß die Arme 45 durch Verlagerung der Welle 41 in Kontakt mit der Anlagefläche 17 bringbar sind. Je nach Einstellung des Anschlagmittels 47 läßt sich der Arm 45 mehr oder weniger stark gegen die Anlagefläche 17 beziehungsweise die Dichtung 15 drücken. Die Einspannleisten 13 sind auf der Konterplatte 7 dabei so angeordnet, daß die von den Armen 45 auf die Anlagefläche 17 wirkende Kraft entgegengesetzt der Vorschubrichtung P der Sägeeinheit gerichtet ist. Die Schnittrichtung erfolgt also von der sichtbaren Fläche 25 zur Anla.gefläche 17.

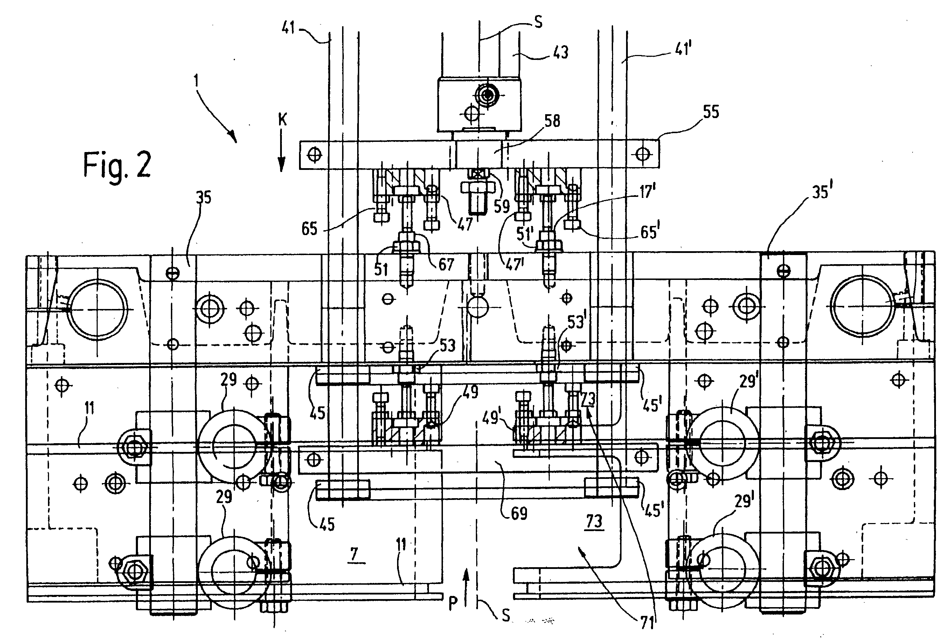

Aus der in Figur 2 gezeigten Draufsicht ergibt sich, daß die Vorrichtung 1 symmetrisch zu einer Achse S aufgebaut ist. Da mit Bezug auf die Fgur 1 a bereits eine der beiden Symmetriehälften der Sägevorrichtung 1 erläutert wurde, wird auf die Beschreibung der anderen Symmetriehälfte verzichtet. Vielmehr wurden gleiche Teile mit gleichen Bezugsziffem gekennzeichnet, wobei die Bezugszeichen in der zweiten Symmetriehälfte durch ein Apostroph " ' " ergänzt sind.

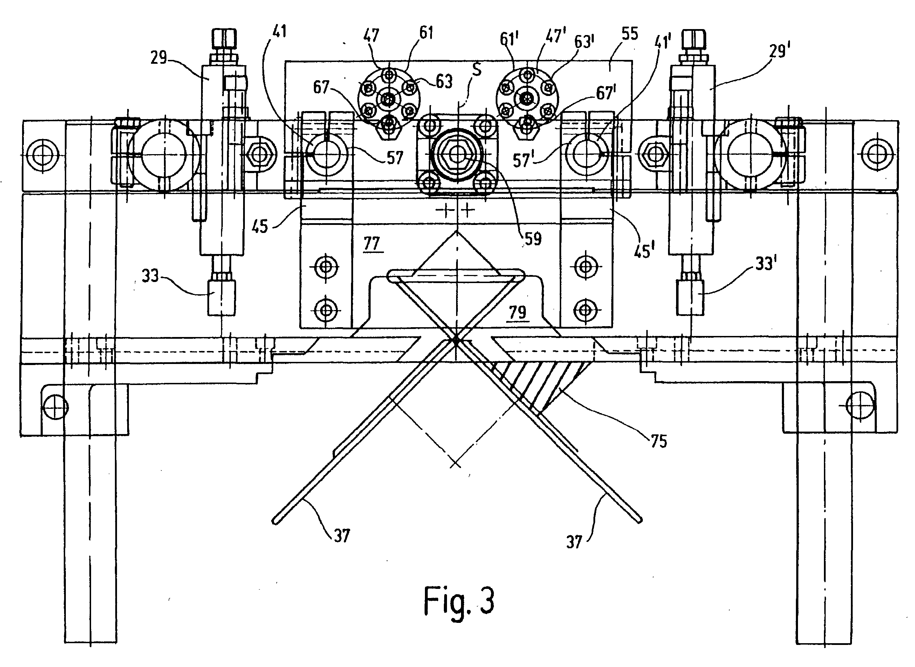

In der Figur 2 ist zu erkennen, daß die beiden Wellen 41, 41' über ein Koppelelement 55 mit dem Antrieb 43 gekoppelt sind. Bei dem Koppelelement 55 handelt es sich um eine rechteckförmige Platte, wie in Figur 3 deutlich zu erkennen ist. Das Koppelelement 55 ist symmetrisch zur Symmetrieebene S aufgebaut. Zur Befestigung des Koppelelements 55 an den Wellen 41 ist jeweils eine Bohrung 57, 57' vorgesehen, die von der jeweiligen Welle durchgriffen wird. Mittels einer nicht dargestellten Schraube läßt sich der Durchmesser der Bohrung 57, 57' , bedingt durch einen von der Bohrung zum Plattenrand sich erstreckenden Spalt, verändern, so daß eine Klemmwirkung erzielbar ist.

Auf der die beiden Bohrungen 57, 57 verbindenden parallel zur Längsachse der Platte 55 verlaufenden Geraden ist zentriert eine Bohrung 58 vorgesehen, die von einer Schraube 59 durchgriffen wird. Diese Schraube 59 ist ihrerseits mit dem Antrieb 43 verbunden und gewährleistet somit eine feste mechanische Verbindung zwischen dem Antrieb 43 und dem Koppelelement 55.

Die beiden Anschlagmittel 47, 47' sind, wie in Figur 3 deutlich zu erkennen, symmetrisch zur der Achse S mittels einer Schraubverbindung an dem Koppelelement 55 in der bezüglich der Plattenlängsachse oberen Hälfte angebracht. Die Anschlagmittel 47, 47' umfassen einen in Draufsicht kreisförmigen Träger 61, 61', in den auf einem Kreis liegende äquidistante Bohrungen 63, 63' eingebracht sind. Die Bohrungen 63 dienen zur Aufnahme von Schrauben 65, 65', deren Schraubenkopf als eigentlicher Anschlag wirkt. Die beiden Träger 61, 61' sind auf dem Koppelelement 55 so angeordnet, daß lediglich die - bezüglich der Darstellung in Figur 3 - unterste Schraube 67, 67' mit dem Gegenanschlag 51, 51' zusammenwirkt. Werden die Schrauben 65 unterschiedlich lang ausgewählt oder unterschiedlich weit in die Bohrungen eingeschraubt, so ist ein Anschlagmittel erzielbar, das durch Drehen des Trägers 61, 61' sehr einfach veränderbar ist.

Aus der Figur 2 ist noch zu erkennen, daß die Anschlagmittel 47, 47' die Bewegung in Richtung des Pfeiles K der beiden Wellen 41, 41' begrenzen, indem die Schrauben 67, 67' gegen den Gegenanschlag 51, 51', der fest mit Rahmen der Vorrichtung 1 verbunden ist, anschlagen.

Die in Figur 2 zu erkennenden Anschlagmittel 49, 49' sind identisch zu den Anschlagmitteln 47, 47' ausgebildet, so daß auf eine nochmalige Beschreibung verzichtet wird. Zur Begrenzung der Verlagerung der beiden Wellen 41, 41' und damit der Arme 45, 45' in entgegengesetzter Richtung des Pfeiles K sind die beiden Anschlagmittel 49, 49' jedoch um 180° gedreht an einem Koppelelement 69, also an dessen dem Koppelelement 55 zugewandten Fläche angebracht. Das Koppelelement 69 selbst ist in gleicher Weise wie das Koppelelement 55 ausgebildet und mit den Wellen 41, 41' verbunden. Lediglich die für die Verbindung mit dem Antrieb 43 vorgesehene Bohrung fehlt.

In die Konterplatte 7 ist, wie sich aus der Figur 2 deutlich ergibt, im Bereich der Symmetrieachse S ein Durchbruch 71 vorgesehen, der an einem dem Antrieb 43 gegenüberliegenden Rand offen ist. Dieser Durchbruch 71 liegt einerseits im Verlagerungsweg des Sägeblattes 37 und erstreckt sich andererseits senkrecht zu der Symmetrieachse S - bezüglich der Figur 2 - nach rechts, wo Bereiche 73 ausgebildet werden. Diese Bereiche 73 gewährleisten, daß beim Schneiden der Einspannleisten entstehende Abfallstücke aus dem Schnittbereich nach unten fallen können. In der Figur 3 ist ein solches Abfallstück 75 dargestellt.

Die Figur 3 läßt des weiteren erkennen, daß die beiden Arme 45, 45' eine Platte 77 tragen, die durch Schrauben befestigt ist. Diese Platte 77 erstreckt sich - bezüglich der Darstellung in Figur 3 - in horizontaler Richtung von dem linken Arm 45 zum rechten Arm 45'. Die Erstreckung in vertikaler Richtung sollte größer gewählt werden, als die maximale Höhe h einer zu schneidenden Einspannleiste 13.

In die Platte 77 ist ein zur Konterplatte 7 hin randoffener Durchbruch 79 ausgebildet, dessen Form so gewählt wird, daß das Sägeblatt 37 in unterschiedlichen Winkelstellungen in Richtung des Pfeils P - in Figur 3 senkrecht zur Zeichenebene- verlagerbar ist, ohne mit der Platte 77 zu kollidieren.

Darüber hinaus ist die Form des Durchbruchs 79 so zu wählen, daß im der Konterplatte 7 benachbarten Randbereich der Platte 77 - in Längsrichtung gesehen - eine möglichst große Fläche entsteht, die - wie später noch erläutert - mit der Anlagefläche 17 einer Einspannleiste 13 in Kontakt gebracht werden soll.

Mit Hilfe des Antriebs 43 ist diese Platte 77, die beim Sägen eine Glas- bzw. Fensterscheibe simuliert, bezüglich Figur 3 senkrecht zur Zeichenebene verlagerbar, wobei die Anschlagmittel 47, 47' die Verlagerung in Richtung der Einspannleisten 13 begrenzen.

Die mit Bezug auf die Figuren 1 bis 3 beschriebene Sägevorrichtung übt nun folgende Funktion aus:

Zunächst werden, wie in Figur 1 zu erkennen, zwei Einspannleisten 13 beabstandet zueinander auf die Konterplatte 7 aufgelegt, derart, daß die Vorsprünge 21 in die Nuten 11 eingreifen und die Anlageflächen 17 dem Antrieb 43 zugewandt sind. Beim Einlegen befinden sich die beiden Arme 45 mit den Platten 77 in ihrer linken Anschlagstellung, in der das Anschlagmittel 49 wirksam ist. Anschließend werden die beiden Einspannleisten mittels der Spannvorrichtungen 29 auf die Konterplatte 7 gedrückt und damit lagefixiert.

Im nächsten Schritt werden die beiden Platten 77 in ihre rechte Endstellung, in der das Anschlagmittel 47 wirksam ist, mittels des Antriebs 43 verlagert. Dabei drücken die Platten 77 mit ihrem unteren Randbereich gegen die Anlageflächen 17 der beiden Einspannleisten 13 und bewirken somit eine Verformung der Dichtungen 15. Das Maß dieser Verformung läßt sich mit Hilfe des Anschlagmittels 47 einstellen. Die auf die Einspannleiste 13 wirkende Kraft sorgt für eine Verkippung der Einspannleiste 13 um eine Achse, die parallel zur Längsachse der Einspannleiste verläuft. In der Figur 1 ist diese Verkippung durch eine lediglich beispielhafte Winkelangabe von 2° gekennzeichnet. In diesem verkippten Zustand, der der Einbaulage im Rahmen entspricht, wird das Sägeblatt 37 nun in Richtung des Pfeiles P verlagert und damit die Einspannleisten gesägt. Je nach Bedarf läßt sich das Sägeblatt 37, wie in Figur 3 gezeigt, verschwenken, so daß auch Gehrungsschnitte möglich sind. Das bei Gehrungsschnitten entstehende Abfallstück 75 fällt dann durch die Öffnungen 73 in der Konterplatte 7 aus dem Schnittbereich nach unten heraus.

Dadurch, daß die Platten 77 gegen die Dichtungen 15 der Einspannleisten 13 drücken, wird neben der Verkippung der Einspannleisten darüber hinaus eine Fixierung der Dichtungen 15 erreicht, so daß diese beim Sägen nicht herausgerissen werden.

Die Anordnung der Einspannleisten 13 mit deren Anlageflächen 17 zum Antrieb 43 gerichtet hat den Vorteil, daß die sichtbaren Flächen 25, 27 von außen nach innen gesägt werden, so daß keine sichtbare Gratbildung auftritt.

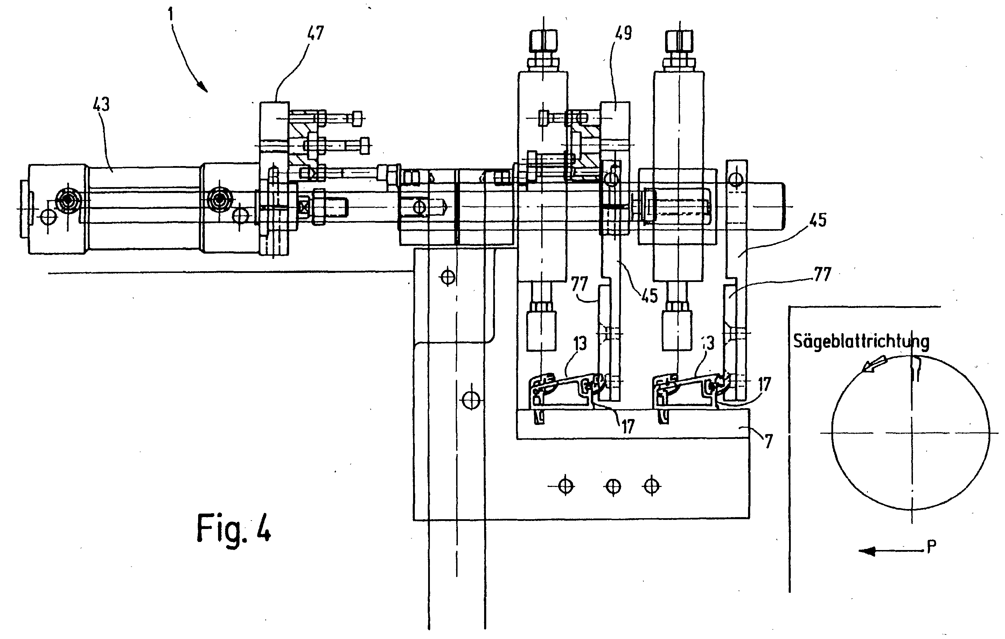

In Figur 4 ist ein zweites Ausführungsbeispiel einer Sägevorrichtung 1 dargestellt, das im wesentlichen dem mit Bezug auf die Figuren 1 bis 3 beschriebenen Ausführungsbeispiel entspricht. Auf die Beschreibung der mit gleichen Bezugszeichen wie in den Figuren 1 bis 3 gekennzeichneten Teilen wird deshalb verzichtet. Die Vorrichtung 1 unterscheidet sich gegenüber der zuvor beschriebenen Vorrichtung lediglich darin, daß die Einspannleisten 13 so auf die Konterplatte 7 aufgesetzt werden, daß deren Anlageflächen 17 dem Antrieb 43 abgewandt sind. Entsprechend sind die Platten 77 an den Armen 45 an deren dem Antrieb 43 zugewandten Seiten angebracht und beaufschlagen folglich die Einspannleisten 13 durch Verlagern in Richtung des Pfeiles P mit einer in die gleiche Richtung wirkenden Kraft. Da das Anschlagmittel 49 die Verlagerung -bezüglich der Figur 4 - nach links begrenzt, ist das Maß der wirkenden Kraft an diesem Anschlagmittel 49 einzustellen. Die Funktionen der beiden Anschlagmittel 47, 49 sind somit gegenüber dem ersten Ausführungsbeispiel vertauscht.

Ein weiteres nicht dargestelltes Ausführungsbeispiel besteht darin, bei der mit Bezug auf die Figuren 1 bis 3 gezeigten Sägevorrichtung 1 das Anschlagmittel 49 wegzulassen und statt dessen in diesem Bereich eine Absaugvorrichtung vorzusehen. Dies hat den Vorteil, daß der beim Sägen entstehende Abfall auf einfache Art und Weise abgesaugt und dem Recycling zugeführt werden kann.

Alle Ausführungsbeispiele haben jedoch gemein, daß eine Platte 77 vorgesehen ist, die beim Sägen gegen die Anlagefläche 17 der Einspannleiste 13 drückt und somit die Einspannleiste in eine Lage bringt, die jener im eingebauten Zustand entspricht. Eine deutliche Verbesserung der Schnittflächen und der Paßgenauigkeit benachbarter Einspannleisten im Rahmen wird dadurch auf einfache Art und Weise ermöglicht.

## Patentansprüche

1. Vorrichtung zum Schneiden einer eine Scheibenanlagefläche (17) aufweisenden Scheiben-Einspannleiste (13), die einen Vorsprung (21) und eine Dichtung (15) aufweist, mit einer Auflagefläche (7) für die Scheiben-Einspannleiste (13), wobei die Auflagefläche (7) eine Nut (11) zur Aufnahme des Vorsprungs (21) aufweist, und eine Spanneinrichtung (29) zur Beaufschlagung der Scheiben-Einspannleiste (13) mit einer senkrecht zur Auflagefläche (7) wirkenden Einspannkraft, **dadurch gekennzeichnet, dass**
die Spanneinrichtung (29) ein Spannelement (33) aus einem Gummi-Material aufweist, das mit der Scheiben-Einspannleiste zusammenwirkt, ein Mittel (41,43, 45, 77) zur Beaufschlagung der Scheiben-Einspannleiste (13) an der Dichtung (15) mit einer parallel zur Auflagefläche (7) wirkenden Kraft, die durch die Wirkung der Spanneinrichtung (29), des Spannelements (33) und dem Vorsprung (21) in der Nut (11) zu einer Verkippung der Scheiben-Einspannleiste (13) um deren Längsachse führt.

2. Vorrichtung nach Anspruch 1, **dadurch gekennzeichnet, dass** das Mittel eine Platte (77) aufweist, die in Kontakt mit der Anlagefläche (17) bringbar ist.

3. Vorrichtung nach Anspruch 2, **dadurch gekennzeichnet, dass** die Platte (77) mittels eines Antriebs (43) parallel zur Auflagefläche (7) verlagerbar angeordnet ist.

4. Vorrichtung nach Anspruch 3, **dadurch gekennzeichnet, dass** der Antrieb ein pneumatischer Antrieb (43) ist.

5. Vorrichtung nach Anspruch 3 oder 4, **dadurch gekennzeichnet, dass** dem Antrieb (43) ein Anschlagmittel (47; 49) zugeordnet ist, das die Verlagerung der Platte (77) begrenzt, derart, dass eine vordefinierte Position erreichbar ist.

6. Vorrichtung nach Anspruch 5, **dadurch gekennzeichnet, dass** das Anschlagmittel (47) zumindest eine einstellbare Schraube (67) aufweist, die mit einer ortsfest angeordneten Gegenanschlagfläche (51) zusammenwirkt.

7. Vorrichtung nach einem der vorhergehenden Ansprüche, **dadurch gekennzeichnet, dass** eine die Auflagefläche bildende Konterplatte (7) vorgesehen ist, in der eine Nut (11) ausgebildet ist.

8. Vorrichtung nach einem der vorhergehenden Ansprüche**dadurch gekennzeichnet, dass** zumindest eine parallel zur Auflagefläche (7) verlaufende Welle (41) angeordnet ist, die mit dem Antrieb (43) gekoppelt und an der die Platte (77) angebracht ist.

9. Vorrichtung nach Anspruch 8, **dadurch gekennzeichnet, dass** an der Welle (41) ein sich senkrecht zur Auflagefläche (7) erstreckender Arm (45) angebracht ist, wobei der Arm (45) die Platte (77) trägt.

10. Vorrichtung nach Anspruch 7, **dadurch gekennzeichnet, dass** die Konterplatte (7) so ausgebildet ist, dass die Anlagefläche der Einspannleiste (13) der Säge - in deren Vorschubrichtung gesehen - abgewandt ist.

11. Vorrichtung nach Anspruch 8, **dadurch gekennzeichnet, dass** in der Konterplatte (7) im Sägebereich Öffnungen (71, 73) vorgesehen sind, die als Abfallöffnungen dienen.

12. Vorrichtung nach Anspruch 5, **dadurch gekennzeichnet, dass** das Anschlagmittel (47) ein drehbares Trägerelement (61) umfasst, an dem mehrere Schrauben (63) angeordnet sind.

13. Vorrichtung nach Anspruch 12, **dadurch gekennzeichnet, dass** das Trägerelement (61) im Querschnitt kreisförmig augebildet ist, und dass die Schrauben auf einer Kreislinie gleichmäßig beabstandet zueinander angeordnet sind.

14. Verfahren zum Schneiden einer eine Scheibenanlagefläche (17) aufweisenden Scheiben-Einspannleiste, die an der Scheibenanlagefläche (17) eine Dichtung (15) und an einer benachbarten Seite einen Vorsprung (21) aufweist, wobei die Scheiben-Einspannleiste (13) auf einer Auflagefläche (7) über ein Spannelement (33) einer Spanneinrichtung (29) festgeklemmt wird, wobei der Vorsprung (21) in eine Nut (11) in der Auflagefläche (7) eingreift, **dadurch gekennzeichnet, dass** die Scheiben-Einspannleiste (13) an der Dichtung (15) mit einer parallel zu der Auflagefläche (7) wirkenden Kraft beaufschlagt wird, die ein Kippmoment erzeugt, das bedingt durch die Fixierung des Vorsprungs (21) in der Nut (11) und das Spannelement (33) aus Gummi zu einer verkippung der Scheiben-Einspannleiste (13) um eine parallel zu ihrer Längsachse verlaufenden Achse führt, und dass die Scheiben-Einspannleiste in dieser Position gehalten wird.

## Claims

1. Device for cutting a pane clamping-in strip (13) having a pane abutment face (17), the pane clamping-in strip (13) comprising a projection (21) and a sealing (15), the said device having a supporting face (7) for the pane clamping-in strip (13), the supporting face (7) comprising a groove (11) for receiving the projection (21), and a clamping arrangement (29) for acting upon the strip (13) with a clamping-in force acting perpendicularly to the supporting face (7), **characterized in that** the clamping arrangement (29) comprises a clamping element (33) made of a rubber material, which interacts with the pane clamping-in strip, a means (41, 43, 45, 77) for applying a force parallel to the supporting face (7) to the sealing (15), the pane clamping-in strip (13) being tilted about its longitudinal axis by means of the clamping arrangement (29), the clamping element (33) and the projection (21) in the groove (11).

2. Device according to claim 1, **characterized in that** the means has a plate (77) which can be brought into contact with the abutment face (17).

3. Device according to claim 2, **characterized in that** the plate (77) is disposed so as to be displaceable, parallel to the supporting face (7), by means of a drive (43).

4. Device according to claim 3, **characterized in that** the drive is a pneumatic drive.

5. Device according to claim 3 or 4, **characterized in that** a stop means (47; 49), which limits the displacement of the plate (77) in such a way that a predefined position can be reached, is associated with the drive (43).

6. Device according to claim 5, **characterized in that** the stop means (47) has at least one settable screw (67) which interacts with a counter-stop face (51) disposed in a stationary manner.

7. Device according to one of the preceding claims, **characterized in that** a counter-plate (7) is provided which forms the supporting face and in which a groove (11) is constructed.

8. Device according to one of the preceding claims, **characterized in that** at least one shaft (41) is disposed which runs parallel to the supporting face (7) and which is coupled to the drive (43) and attached to the plate (77).

9. Device according to claim 8, **characterized in that** an arm (45) which extends perpendicularly to the supporting face (7) is attached to the shaft (41), the said arm (45) carrying the plate (77).

10. Device according to claim 7, **characterized in that** the counter-plate (7) is constructed in such a way that the abutment face of the clamping-in strip (13) faces away from the saw - viewed in the direction of advance of the latter.

11. Device according to claim 8, **characterized in that** apertures (71, 73), which serve as apertures for scrap, are provided in the counter-plate (7) in the region of the saw.

12. Device according to claim 5, **characterized in that** the stop means (47) comprises a rotatable carrier element (61) on which a number of screws (63) are disposed.

13. Device according to claim 12, **characterized in that** the carrier element (61) is constructed so as to be circular in cross-section, and that the screws are disposed so as to be uniformly spaced apart from one another on a circular line.

14. Process for cutting a pane clamping-in strip (13) having a pane abutment face (17), which comprises at the pane abutment face (17) a sealing (15) and adjacent thereto a projection (21), the pane clamping-in strip (13) being clamped on a supporting face (7) via a clamping element (33) of a clamping arrangement (29), the projection (21) engaging into a groove (11) in the supporting face (7), **characterized in that** the pane clamping-in strip (13) is applied with a force parallel to the supporting face (7) at the sealing (15) causing an overturning moment resulting in a tilt of the pane clamping-in strip (13) about an axis parallel to its longitudinal axis due to the fixation of the projection (21) in the groove (11) and the clamping element (33) made of rubber, and that the pane clamping-in strip is hold in this position.

## Revendications

1. Dispositif pour couper une baguette d'encadrement de vitre (13) présentant une surface d'application de vitre (17), baguette qui présente une saillie (21) et un joint d'étanchéité (15), le dispositif comportant une surface de support (7) pour la baguette d'encadrement de vitre (13), la surface de support (7) présentant une rainure (1 1 ) prévue pour recevoir la saillie (21), et un dispositif de serrage (29) destiné à exercer sur la baguette (13) une force de serrage agissant perpendiculairement à la surface de support (7), **caractérisé en ce que** le dispositif de serrage (29) comporte un élément de serrage (33) en matériau du type caoutchouc, qui coopère avec la baguette d'encadrement de vitre, pour agir sur la baguette d'encadrement (13) au niveau du joint d'étanchéité (15) avec une force orientée parallèlement à la surface de support (7), qui sous l'effet du dispositif de serrage (29), de l'élément de serrage (33) et de la saillie (21) engagée dans la rainure (11) conduit à un basculement de la baguette d'encadrement de vitre (13) autour de son axe longitudinal.

2. Dispositif selon la revendication 2, **caractérisé en ce que** ledit moyen présente une plaque (77) qui peut être amenée en contact avec la surface d'application (17).

3. Dispositif selon la revendication 2, **caractérisé en ce que** la plaque (77) est disposée de manière à pouvoir être déplacée au moyen d'un dispositif d'entraînement (43), parallèlement à la surface de support (7).

4. Dispositif selon la revendication 3, **caractérisé en ce que** le dispositif d'entraînement est un dispositif d'entraînement pneumatique (43).

5. Dispositif selon la revendication 3 ou 4, **caractérisé en ce qu'**au dispositif d'entraînement (43) est associé un moyen de butée (47 ; 49) qui limite le déplacement de la plaque (77), de manière que l'on puisse atteindre une position prédéfinie.

6. Dispositif selon la revendication 5, **caractérisé en ce que** le moyen de butée (47) présente au moins une vis réglable (67) qui coopère avec une contre-surface de butée (51) disposée de manière fixe.

7. Dispositif selon l'une des revendications précédentes, **caractérisé en ce qu'**il est prévu une contre-plaque (7) qui forme la surface de support et dans laquelle est formée une rainure (11).

8. Dispositif selon l'une des revendications précédentes, **caractérisé en ce qu'**il est prévu au moins un arbre (41) s'étendant parallèlement à la surface de support (7) qui est accouplé au dispositif d'entraînement (43) et sur lequel est montée la plaque (77).

9. Dispositif selon la revendication 8, **caractérisé en ce que** sur l'arbre (41) est monté un bras (45) s'étendant perpendiculairement à la surface de support (7), le bras (45) portant la plaque (77).

10. Dispositif selon la revendication 7, **caractérisé en ce que** la contre-plaque (7) est formée de manière que la surface d'application de la baguette d'encadrement (13) soit tournée à l'opposé de la scie, vue dans son sens d'avance.

11. Dispositif selon la revendication 8, **caractérisé en ce que** dans la contre-plaque (7) sont prévues, dans la zone de la scie, des ouvertures (71, 73) qui servent d'ouvertures pour les déchets.

12. Dispositif selon la revendication 5, **caractérisé en ce que** le moyen de butée (47) comprend un élément de support (61) rotatif sur lequel sont disposées plusieurs vis (63).

13. Dispositif selon la revendication 12, **caractérisé en ce que** l'élément de support (61) présente une section transversale circulaire et **en ce que** les vis sont disposées régulièrement espacées les unes des autres sur un cercle.

14. Procédé de coupe d'une baguette d'encadrement de vitre (13) présentant une surface d'application de vitre (17), baguette qui présente un joint d'étanchéité (15) sur la surface d'application de vitre (17) et une saillie (21) sur un côté adjacent, la baguette d'encadrement de vitre (13) étant fermement serrée sur une surface de support (7), par l'intermédiaire d'un dispositif de serrage (29), la saillie (21) s'engageant dans une rainure (11) prévue dans la surface d'application (7), **caractérisé en ce que** la baguette d'encadrement de vitre (13) est sollicitée contre le joint d'étanchéité (15) par une force agissant parallèlement à la surface de support (7), qui produit un couple de basculement, lequel conduit, du fait que la saillie (21) est fixée dans la rainure (11) et en raison de la présence de l'élément de serrage (33) en caoutchouc, à un basculement de la baguette d'encadrement de vitre (13) autour d'un axe parallèle à son axe longitudinal, et **en ce que** la baguette d'encadrement de vitre est maintenue dans cette position.
